# EUROPEAN PATENT APPLICATION

(11) **EP 0 795 699 A1**
(43) Date of publication of application: **17.09.1997**
(21) Application number: 97200630.8
(22) Date of filing: 04.03.1997
(51) Int. Cl.: F16H 55/14, B60J 7/057

(54) **Drive-unit; and an open roof contruction for a vehicle provided with a drive unit**

(30) Priority: 13.03.1996 NL 1002589
(71) Applicant: Inalfa Industries B.V., NL-5804 AB Venray (NL)
(72) Inventor: Reivers, Petrus Gerardus Marie, 5944 BC Arcen (NL)
(74) Representative: Metman, Karel Johannes

(57) **Abstract**

A drive unit for a closure means (4) of an open roof construction comprises a housing (8), an electric motor (11) having a shaft (11') and being arranged in or on the housing, and a driving gear (12, 13) in engagement with said shaft and having an output shaft (14) journaled within the housing by means of bearings (15, 16 ). According to the invention a vibration damping element (19 - 21) is integrated in the driving gear (12, 13) and/or in the bearings (15, 16) of the output shaft (14). The invention also includes an open roof construction for a vehicle having such a drive unit. Preferably, substantially all possible vibration paths from the drive unit (5) to the frame (3) or other connected elements (6) are insulated by vibration damping elements (19 - 21).

## Description

The present invention relates to a drive unit for a movable part of a vehicle, particularly a closure means of an open roof construction, comprising a housing, an electric motor having a shaft and being arranged in or on the housing, and a driving gear in engagement with said shaft and having an output shaft journaled within the housing by means of bearings.

Particularly when such drive units are used in automobiles, one should meet increasingly higher requirements regarding noise production of the drive unit, which is caused by the fact that the insulation of engine noises to the interior of automobiles is progressively improving and as a consequence other disturbing noise sources become more prominent. In the use of drive units in open roof constructions it is already known to mount the housing of the drive unit to the frame through rubber blocks. This must ensure that less motor and gear vibrations are transmitted to the frame reducing the simultaneous vibration of frame parts and consequently the noise production due to resonance vibrations.

The object of the invention is to provide a drive unit of the type mentioned in the preamble which reduces the transmission of vibrations even further.

For this purpose, the drive unit according to the invention is characterized in that a vibration damping element is integrated in the driving gear and/or in the bearings of the output shaft.

These features reduce or eliminate also the mechanical transmission of vibrations from the drive unit through the output shaft, so that the noise nuisance caused by the drive unit is even more forced back. An additional advantage might be that it also reduces the vibration initiated wear of the transmission members such as pull and push cables in open roof constructions connected to the output shaft of the drive unit, which prolonges the life span thereof.

The invention also includes an open roof construction for a vehicle having an opening in a fixed roof, comprising a frame, a closure means movably supported by the frame, and a drive unit being drivably connected to the closure means, which is characterized in that substantially all possible vibration paths from the drive unit to the frame or other connected elements or insulated by vibration damping elements.

The invention will hereafter be further explained with reference to the drawing showing an embodiment of the invention by way of example.

Fig. 1 is a very schematic plan view of a roof having an open roof construction according to the invention.

Fig. 2 shows the drive unit of the open roof construction in Fig. 1, partly sectioned and on a larger scale.

Fig. 3 is a sectional view along the line III-III in Fig. 2.

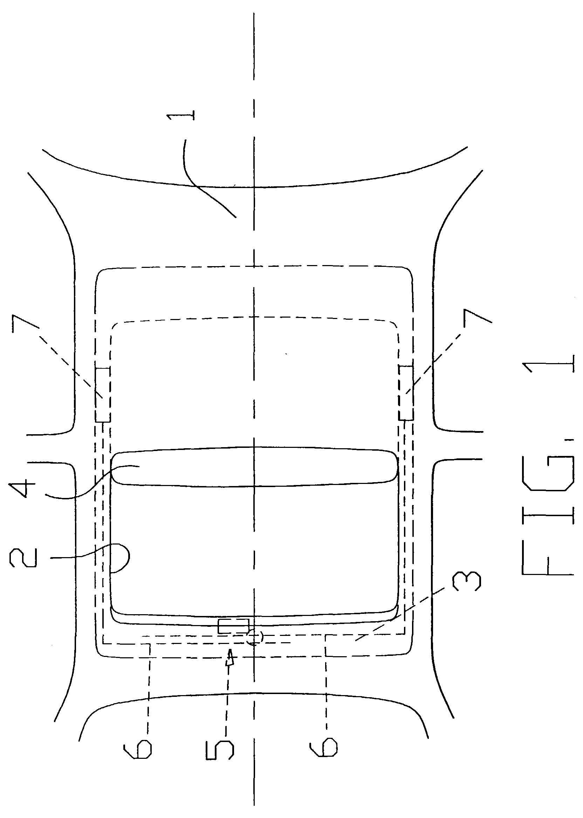

The drawing and first of all Fig. 1 shows a vehicle roof 1 in which an opening 2 is provided in order to mount an open roof construction. This open roof construction may be of a variety of types, such as a folding roof, a tilt and/or sliding roof, a Venetian blind roof, a convertable roof and the like.

In the embodiment shown, the open roof construction comprises a frame 3 to be mounted to the vehicle roof and including a panel 4 functioning as closure means and being movably connected to the frame 3 and adapted to selectively close the opening 2 or to open it fully or partially. For this purpose, the open roof construction includes a drive, in this case a drive with an electric motor. Said drive is provided and is equipped with a drive unit 5 fixed to the frame 3 and being in engagement with transmission members constructed as pull and push cables 6 to adjust two displacement mechanisms 7 on either side of the panel 4, which support the panel 4.

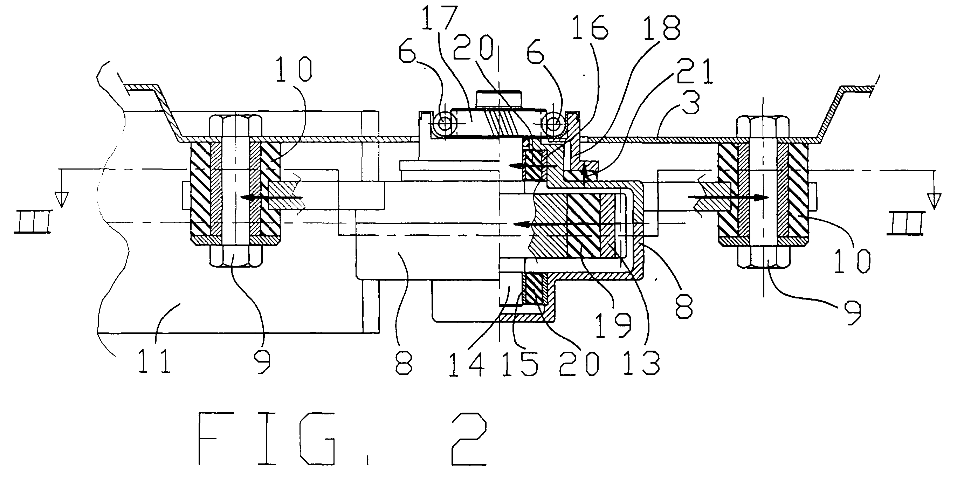

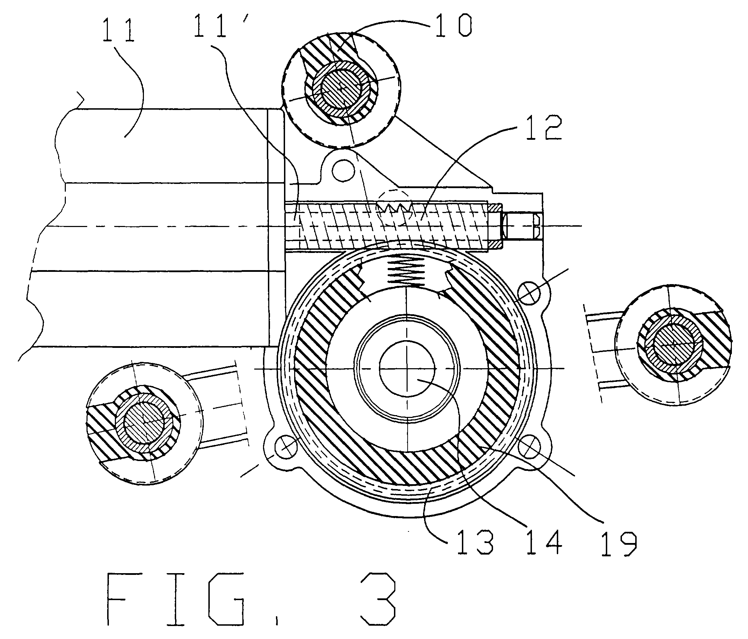

Fig. 2 and 3 show the drive unit 5 on a larger scale. This drive unit comprises a housing 8 consisting of one or several parts and being fixed to, in this case, the front beam of the frame 3 by fixing elements, such as bolts 9, through intervention of blocks 10 of rubber, metal sponge of the like which serve as vibration damping elements for insulating the drive unit 5 from the frame 3. The rubber blocks 10 therefore prevent the transmission of vibrations from the housing 8 of the drive unit 5 to the frame 3.

The drive unit 5 is provided with an electric motor 11 arranged within the housing 8 or having its own housing and being equipped with a shaft 11' having a worm 12 in engagement with a worm wheel 13 together forming the driving gear of the drive unit 4. The worm wheel 13 is mounted on a shaft serving as output shaft 14 and being journaled in bearings 15 and 16 supported by the housing 8. The output shaft 14 extends to the outside the housing 8 and carries on its end projecting outside the housing a special gear wheel 17 to cooperate with the pull and push cables 6. These pull and push cables 6 are guided in a cable fixing means 18.

It is shown in Fig. 2 and 3 that the drive unit 5 comprises a plurality of vibration damping elements made of rubber or elastic material of another type, for example metal sponge or the like, said elements being a rubber ring 19 in the worm wheel 12, a rubber core 20 in the bearings 14 and 15 and a rubber ring 21 between the housing 8 and the cable fixing means 18. These vibration damping (springy, symbolical indicated by a spring at 19) elements 19, 20 and 21 interrupt all possible vibration paths from the drive unit 5 to connected parts (in this case the cables 6 besides the frame 3). These possible paths are indicated in Fig. 2 by arrows. The vibrations might be caused by the operation of the electric motor and the driving gear and might also consist of variations in the torque thereof. Due to this total insulation of the vibrations, a substantial reduction of the noise production, originating at the drive unit, can be obtained.

It is noted that the invention can also be used in drive units for other purposes, such as for electric windows in a vehicle and also for uses other than in vehicles.

The invention is not restricted to the embodiment shown in the drawing and described herein before, which may be varied in different manners within the scope of the invention.

## Claims

1. Drive unit for a movable part of a vehicle, particularly a closure means (4) of an open roof construction, comprising a housing (8), an electric motor (11) having a shaft (11') and being arranged in or on the housing, and a driving gear (12, 13) in engagement with said shaft and having an output shaft (14) journaled within the housing by means of bearings (15, 16 ), **characterized** in that a vibration damping element (19 - 21) is integrated in the driving gear (12, 13) and/or in the bearings (15, 16) of the output shaft (14).

2. Drive unit according to claim 1, wherein the driving gear (12, 13) includes a gear wheel (13) in which a vibration damping element (19) extending circumferentially is integrated, said element (19) insulating a shaft (14) of the gear wheel from the part of the gear wheel having teeth.

3. Drive unit according to claim 2, wherein the vibration damping element (19) of the gear wheel (13) is a ring.

4. Drive unit according to claim 2 or 3, wherein the gear wheel (13) is mounted on the output shaft (14).

5. Drive unit according to one of the preceding claims, wherein the bearings (15, 16) of the output shaft (14) comprise a core as vibration damping element (20).

6. Drive unit according to one of the preceding claims, wherein the output shaft (14) of the drive gear (12, 13) is engageable with pull and push cables (6) through an output gear wheel (17), said cables (6) may be guided in a cable fixing means (18) supported on the housing (8) through a vibration damping element (21).

7. Drive unit according to one of the preceding claims, wherein all possible vibration paths from the drive unit (5) are insulated by vibration damping elements (19 - 21).

8. Drive unit according to one of the preceding claims, wherein the vibration damping elements (10, 19 - 21) are made of rubberlike or plastic material or a metal.

9. Open roof construction for a vehicle having an opening (2) in a fixed roof (1), comprising a frame (3), a closure means (4) movably supported by the frame, and a drive unit (5) being drivably connected to the closure means, **characterized** in that substantially all possible vibration paths from the drive unit (5) to the frame (3) or other connected elements (6) are insulated by vibration damping elements (19 - 21).
